# EUROPÄISCHE PATENTANMELDUNG

(11) **EP 1 816 385 A2**
(43) Veröffentlichungstag der Anmeldung: **08.08.2007**
(21) Anmeldenummer: 07101091.2
(22) Anmeldetag: 24.01.2007
(51) Int. Cl.: F16L 37/098

(54) **Wasserleitungskupplung**

(30) Priorität: 01.02.2006 DE 202006001533 U
(71) Anmelder: Emil Lux GmbH & Co. KG, 42929 Wermelskirchen (DE)
(72) Erfinder: Lux, Harald, 42859 Remscheid (DE)
(74) Vertreter: Selting, Günther

(57) **Zusammenfassung**

Eine Wasserleitungskupplung weist eine Kupplungshülse (21) auf, die auf einen Steckzapfen (13) steckbar ist. Die Kupplung (20) weist eine Verriegelungshülse (23) auf, die zum Lösen der Kupplung gedreht oder axial bewegt werden kann. Die Verriegelungshülse (23) ist mit einem vorstehenden weichelastischen Greifring (24) versehen, der das Ergreifen und Betätigen erleichtert. Ein Sichtfenster (26) zeigt den Verriegelungszustand an. Eine Schlauchbefestigung (22) ist mit einem Schlauchkäfig (30) als Knickschutz für den eingesteckten Schlauch versehen.

## Beschreibung

Die Erfindung betrifft eine Wasserleitungskupplung, insbesondere für die Gartenbewässerung, mit einer auf einen Steckzapfen aufsteckbaren Kupplungshülse und einer die Kupplungshülse umgebenden Verriegelungshülse, die zum Freigeben des Steckzapfens relativ zur Kupplungshülse bewegbar ist.

Derartige Wasserleitungskupplungen sind unter im Markennamen Gardena^{®} umfänglich bekannt. Sie werden für die Gartenbewässerung oder auch für anderweitige Wasserverteilungen mit Rohr- oder Schlauchleitungen benutzt. Ein besonderer Vorteil besteht in dem Stecksystem, das es erlaubt, zwei Leitungsteile durch Einstecken eines Steckzapfens in eine Kupplung zu verbinden. Das Lösen erfolgt durch manuelles Entriegeln der Kupplung, indem die Verriegelungshülse gedreht oder verschoben wird.

Bei den üblichen Wasserleitungskupplungen ist die Verriegelungshülse mit relativ flachen Greifmulden versehen, wodurch das sichere Ergreifen und Verstellen der Verriegelungshülse nicht immer problemlos gelingt.

Der vorliegenden Erfindung liegt die Aufgabe zugrunde, eine Wasserleitungskupplung, insbesondere für ein Schnellkupplungssystem bei der Gartenbewässerung, zu schaffen, bei dem die Betätigung der Verriegelungshülse vereinfach wird.

Die Wasserleitungskupplung nach der Erfindung ist definiert durch den Anspruch 1. Hiernach weist die Verriegelungshülse einen seitlich vorstehenden weichelastischen Greifring auf.

Der Greifring dient zur Erhöhung der Griffigkeit der Verriegelungshülse, um deren Verschieben oder Drehen zu erleichtern, und gegebenenfalls zur Verhinderung des Klemmens der Finger beim Lösen der Verriegelungshülse. Damit wird die Handhabbarkeit der Wasserleitungskupplung und die Griffigkeit der Verrieglungshülse verbessert. Die Kupplung ist auch mit nassen oder durch Erde beschmutzten Händen leicht zu lösen bzw. zu bedienen. Insbesondere wenn die Verriegelungshülse zum Entriegeln drehbar ist, ergibt sich eine gute Angreifbarkeit für die Hand an der Verriegelungshülse, ohne die Gefahr des Abrutschens. Aber auch bei einer Verschiebebewegung zum Zwecke des Entriegelns wird die Handhabbarkeit verbessert.

Eine weitere Verbesserung der Griffigkeit der Verriegelungshülse wird dadurch erreicht, dass die Verriegelungshülse in weiterer Ausgestaltung der Erfindung verteilt angeordnete diskrete Noppen aufweist. Der Bereich, in dem die Noppen vorhanden sind, schließt sich an den Bereich des weichelastischen Greifringes an. Er verbreitert die Greifzone und erleichtert auch deren Ertastung im Falle gestörter Sichtverhältnisse.

In vorteilhafter Weiterbildung der Erfindung ist vorgesehen, dass von einer Schlauchbefestigung ein das Abknicken eines eingesetzten Schlauches verhindernder elastischer Schlauchkäfig absteht. Dieses Merkmal hat unabhängig von dem Greifring selbstständige Bedeutung. Es verhindert, dass ein Schlauch, der mit der Wasserleitungskupplung versehen ist, unmittelbar hinter der Kupplung abknickt. Der Schlauchkäfig hat eine solche Steifigkeit, dass er bei einem eingesetzten Schlauch nicht rechtwinklig abknicken kann. Andererseits ist er durch seine Materialbeschaffenheit bzw. Formgebung so weich, dass er Abbiegungen des Schlauchs von dessen axialer Richtung zulässt.

Ein weiterer Aspekt der Erfindung betrifft die Sichtbarmachung des Verriegelungszustandes der Wasserleitungskupplung. Normalerweise kann man der Verriegelungshülse nicht ansehen, ob sie sich im Verriegelungszustand oder im Entriegelungszustand befindet. Es ist daher eine weitere Aufgabe der Erfindung, den jeweiligen Zustand der Verriegelungshülse sichtbar zu machen. Dies geschieht gemäß Anspruch 4 dadurch, dass die Verriegelungshülse ein Sichtfenster aufweist, das auf unterschiedliche Markierungen zur Sichtbarmachung des Verriegelungszustandes und des Entriegelungszustandes einstellbar ist. Durch das Sichtfenster kann der Benutzer also ohne die Kupplung überhaupt anzufassen feststellen, in welchem Zustand sie sich befindet. Hierdurch wird die richtige Handhabung ohne zuerst Versuche durchführen zu müssen, erleichtert.

Im Folgenden werden unter Bezugnahme auf die Zeichnungen Ausführungsbeispiele der Erfindung näher erläutert.

Es zeigen:
- Fig. 1: Eine perspektivische Darstellung einer auf ein Hahnstück aufsteckbaren Wasserleitungskupplung,
- Fig. 2: eine Seitenansicht einer zweiten Ausführungsform der Kupplung und
- Fig. 3: eine Seitenansicht einer dritten Ausführungsform.

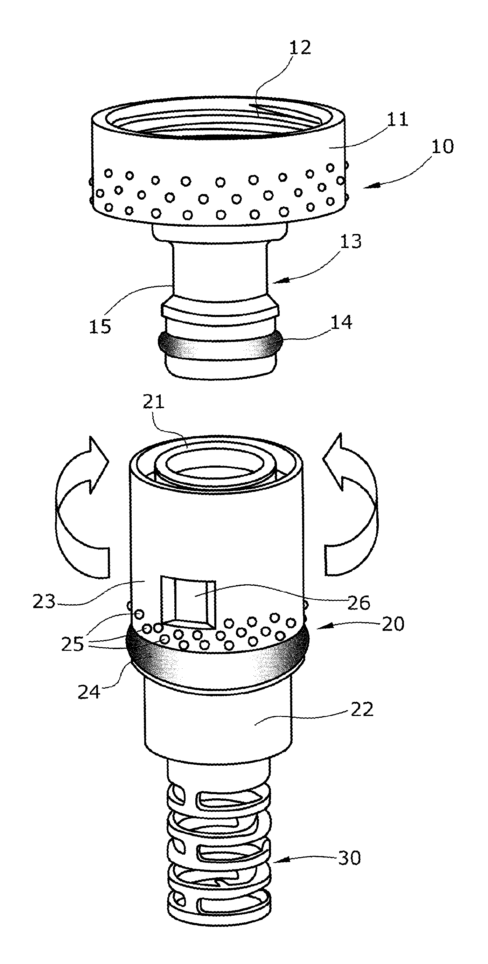

In Fig. 1 ist ein Hahnstück 10 dargestellt, dass an einen Wasserhahn angeschraubt wird und zu diesem Zweck einen Zylinderkörper 11 mit einem auf den Wasserhahn passenden Innengewinde 12 aufweist. Von dem Zylinderkörper 11 steht ein Steckzapfen 13 ab. Dieser trägt einen O-Ring 14. Er weist ein Nutprofil 15 auf, das es ermöglicht, den Steckzapfen in einer Verriegelungshülse gegen axiales Verschieben zu verriegeln.

Die Kupplung 20 zum Aufstecken auf das Hahnstück 10 enthält eine auf den Steckzapfen 13 aufsteckbare Kupplungshülse 21, die von einem Sockel, der als Schlauchbefestigung 22 dient, axial absteht. In die Kupplungshülse 21 wird der Steckzapfen 13 abdichtend eingesteckt. Sodann kann eine Verriegelung des Steckzapfens gegen axiales Herausziehen erfolgen. Die Kupplungshülse 21 ist von einer Verriegelungshülse 23 umgeben, die gedreht (oder axial verschoben) werden kann, um den Steckzapfen 13 zu entriegeln bzw. um die Kupplung 20 von dem Hahnstück 10 abzuziehen. Bei dem vorliegenden Ausführungsbeispiel ist die Verriegelungshülse 23 drehbar und sie wird durch eine (nicht dargestellte) Feder in der Verriegelungsstellung gehalten.

Das Lösen der Verriegelung erfolgt durch Drehen der Verriegelungshülse 23 um ihre Achse. Zur Erleichterung des Drehens und zur Verhinderung von Einklemmen der Finger ist die Verriegelungshülse 23 mit einem seitlich vorstehenden weichelastischen Greifring 24 versehen. Dieser erstreckt sich um den gesamten Umfang der Verriegelungshülse und er bildet einen seitlich vorspringenden gerundeten Wulst. In Folge der erhöhten Griffigkeit des Greifringes, der insbesondere aus Gummi oder einem ähnlich griffigen Material besteht, kann der Verriegelungsring besser ergriffen und betätigt werden. Anschließend an den Greifring 24 weist der Verriegelungsring einen umlaufenden Bereich verteilt angeordneter diskreter Noppen 25 auf. Diese dienen ebenfalls der Erhöhung der Griffigkeit. Ihre Größe kann mit zunehmender Entfernung vom Greifring 24 abnehmen.

Die Verriegelungshülse 23 ist mit einem Sichtfenster 26 versehen. Dieses besteht aus einer Durchbrechung, durch die ein Teil der Kupplungshülse 21 sichtbar ist. Auf diesem sichtbaren Teil befinden sich Markierungen, die die jeweilige Stellung des Sichtfensters 26 angeben. Solche Markierungen können beispielsweise rot (für Verriegelung) und grün (für Entriegelung) sein oder auch Pfeile oder Piktogramme aufweisen. Der Benutzer weiß dann, in welcher Stellung sich die Kupplung befindet.

Von der Schlauchbefestigung 22 steht ein Schlauchkäfig 30 nach hinten ab. Der Schlauchkäfig ist einstückig mit der Schlauchbefestigung 22 ausgebildet. Er besteht aus Kunststoff und bildet umlaufende Rippen, die durch Schlitze getrennt und durch Stege verbunden sind. Diese Formgestaltung verleiht dem Schlauchkäfig eine Steifigkeit und Flexibilität, um als Knickschutz für den eingesteckten Schlauch zu dienen. Der Schlauchkäfig umgibt einen Ringspalt zum Einstecken des Schlauches in die Schlauchbefestigung 22. Durch Drehen der Schlauchbefestigung 22 kann der Schlauch gegen Herausziehen festgeklemmt werden.

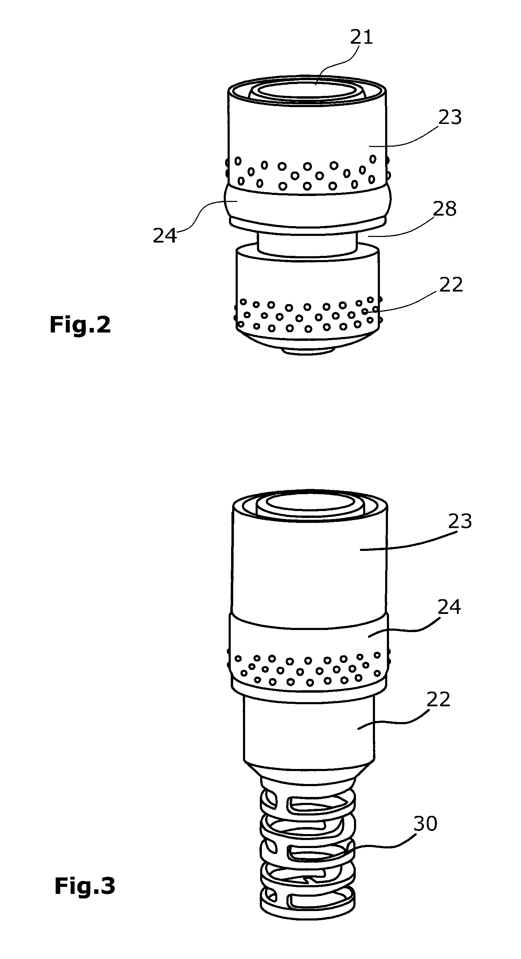

Fig. 2 zeigt ein weiteres Ausführungsbeispiel, bei dem die Verriegelungshülse 23 relativ zu der Schlauchbefestigung 22 axial verschiebbar ist, um die Kupplung von dem Steckzapfen zu entriegeln. Man erkennt den Zwischenraum 28, über den die Verriegelungshülse 23 zum Entriegeln bewegt wird. Der Greifring 24 verhindert insbesondere ein Klemmen der Finger in diesem Zwischenraum 28. Auch bei dieser Variante kann die Verriegelungshülse 23 mit einem Sichtfenster versehen sein.

Fig. 3 zeigt eine Ausführungsform, bei der die Verriegelungshülse 23 aus Metall besteht und einen relativ breiten weichelastischen Greifring 24 aufweist. Von der Schlauchbefestigung 22 erstreckt sich ein elastischer Schlauchkäfig 30 nach hinten. Die Verriegelungshülse kann auch aus anderen Materialien bestehen, beispielsweise aus Kunststoff.

## Patentansprüche

1. Wasserleitungskupplung mit einer auf einen Steckzapfen (13) aufsteckbaren Kupplungshülse (21) und einer die Kupplungshülse umgebenden Verriegelungshülse (23), die zum Freigeben des Steckzapfens bewegbar ist,
**dadurch gekennzeichnet,**
**dass** die Verriegelungshülse (23) einen seitlich vorstehenden weichelastischen Greifring (24) aufweist.

2. Wasserleitungskupplung nach Anspruch 1, **dadurch gekennzeichnet, dass** die Verriegelungshülse (23) verteilt angeordnete diskrete Noppen (25) aufweist.

3. Wasserleitungskupplung, insbesondere nach Anspruch 1 oder 2, **dadurch gekennzeichnet, dass** von einer Schlauchbefestigung (22) ein das Abknicken eines eingesetzten Schlauches verhindernder elastischer Schlauchkäfig (30) absteht.

4. Wasserleitungskupplung mit einer auf einen Steckzapfen (13) aufsteckbaren Kupplungshülse (21) und einer die Kupplungshülse umgebenden Verriegelungshülse (23), die zum Freigeben des Steckzapfens bewegbar ist, **dadurch gekennzeichnet, dass** die Verriegelungshülse (23) ein Sichtfenster (26) aufweist, das auf unterschiedliche Markierungen zur Sichtbarmachung des Verriegelungszustandes und des Entriegelungszustandes einstellbar ist.
